# EUROPEAN PATENT APPLICATION

(11) **EP 4 442 622 A1**
(43) Date of publication of application: **09.10.2024**
(21) Application number: 23166653.8
(22) Date of filing: 05.04.2023
(51) Int. Cl.: B65G 54/02

(54) **CARRIER SYSTEM FOR A LINEAR MOTOR CONVEYING SYSTEM, LINEAR MOTOR CONVEYING SYSTEM AND CORRESPONDING METHOD**

(71) Applicant: Robert Bosch GmbH, 70442 Stuttgart (DE)
(72) Inventor: Tielen, Niels, 4871 LM Etten-Leur (NL); Spruit, Louis, 5502 CA Veldhoven (NL)

(57) **Abstract**

The invention relates to a carrier system (480) for a linear motor conveying system (400), comprising two carrier modules (450), two pivot mechanisms (460), and a link component (470), wherein each of said carrier modules (460) comprises a carrier component (453) and at least two wheels, wherein each of said carrier modules (450) is configured to be received between a first side part and a second side part of a track module (402.1, 402.2), wherein at least a first one of the two wheels and at least a second one of the two wheels are arranged at the carrier component opposite to each other, such that the at least one first wheel faces the first side component and the at least one second wheel faces the second side component, when received in the track module, wherein each of said pivot mechanisms (460) is arranged at a respective one of said carrier modules (460), wherein the link component (470) is pivotally connected with each of said link mechanisms (460) so as to connect said carrier modules (450) with each other, and wherein the link component (470) is configured to provide a mechanical interface (473) for carrying a payload. The invention also relates to such a linear motor conveying system (400) and a method.

## Description

The present invention relates to a carrier system for a linear motor conveying system, to a linear motor conveying system and to a method for providing a linear motor conveying system for carrying a payload. The linear motor conveying system comprises one or more track modules and one or more carrier systems to be guided in the one or more track modules.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive.

### Disclosure of the invention

According to the invention, a carrier system, a linear motor conveying system and a corresponding method with the features of the independent claims are proposed. Advantageous embodiments are subject-matter of dependent claims and of the following description.

The invention relates to linear motor conveying systems and carrier systems used therein. Such a linear motor conveying system comprises one or more track modules and one or more carrier systems to be guided in the one or more track modules. The track modules can be standardized modules, several of such modules can be connected to each other to form a track system. A track module has or defines at least one conveying path, i.e., a path along which the carrier systems are to be guided and moved. Such track modules can be of different types, e.g., straight modules, curve modules, and switch modules. Such different modules in required numbers can be connected to from a track system according to specific needs. While straight modules and curve modules typically have one conveying path, a switch module can have at least two conveying paths, or one conveying path split into two conveying paths.

An embodiment of the invention relates to such a carrier system. The carrier system comprises two carrier modules, two pivot mechanisms, and a link component. Each of aid carrier modules comprises a carrier component and at least two wheels. The wheels can be (rotatably) mounted on respective legs of the carrier component, for example. The carrier module is configured to be received between a first side component and a second side component of a track module. Track modules will be described in more detail later. At least a first one of the two wheels and at least a second one of the two wheels are arranged at the carrier component opposite to each other, such that the at least one first wheel faces the first side component and the at least one second wheel faces the second side component, when received in the track module.

In an embodiment, at least one of said carrier modules further comprises two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module. This allows electromagnetic conveying of the carrier module.

Each of said pivot mechanisms is arranged at a respective one of said carrier modules. For example, the respective pivot mechanism can be connected to the respective carrier module or its carrier component. Each of said carrier modules can comprise connection interface means, in particular, at a top side, for a respective one of said pivot mechanism. Further, each of said pivot mechanism can comprise a rod or rod shape structure, for example. The connection interface means can comprise, for example, a dowel pinhole for said rod, and one or more threaded holes for screws to connect a pivot mechanism to a carrier component.

The link component is pivotally connected with each of said link mechanisms so as to connect said carrier modules with each other. The link component can comprise through holes or bearings to be pivotally, with which the mentioned rods can connected

In an embodiment, the link component is pivotally connected with each of said link mechanism, pivotable about a respective pivot axis, wherein said pivot axes are oriented perpendicular to a conveying direction of said carrier modules when received in a track module. Further, the carrier system can be configured such that said carrier modules are spaced apart from each other, via the link component, e.g., by at least a distance corresponding to a length of one of said carrier modules in conveying direction. The link component can be of an elongated form having two ends, wherein the link component is pivotally connected with each of said link mechanism at a respective one of said ends.

Further, the link component is configured to provide a mechanical interface for carrying a payload like a workpiece. The mechanical interface can, for example, comprise a surface, wherein said surface is aligned, at least essentially, with said conveying direction.

In this way, standardized track modules, in particular, curves and switches, can be used for payloads or workpieces of different desired sizes. The standardized curve and switch track modules typically do not allow using individual carrier modules of different sizes but require a specific size or shape of carrier modules. Two of these carrier modules can be connected by the link component, which can be chosen with a desired size or length. This allows moving higher payloads through the system, while at the same time keep using the standardized curve and switch modules.

It is noted that each of said carrier modules can comprise such two counterpart electro-magnetic motor components mentioned above. However, operating the system is also possible with only one of said carrier modules can comprise such two counterpart electro-magnetic motor components due to the two carrier modules linked to each other.

Further, it is noted that also more than two of said carrier modules can be linked in this way. For example, several of those link components can be used, each link component connecting two adjacent carrier modules. Where two link components have to be connected to the same carrier module or the respective pivot mechanism, the respective ends of the link components could be adapted if required.

Further, the link component can be made of a rigid material and/or having a rigid structure. This allows carrying a heavy load.

Another embodiment of the invention relates to a linear motor conveying system, comprising one or more track systems, and one or more carrier systems as described above, to be received and guided in the one or more track modules. The one or each of the more carrier systems or their respective carrier modules are received or receivable in the one or each of the more track modules. In order to connect several track modules to each other, appropriate connection means like screws or from fittings can be provided for mechanical connection. Also, electrical connection of the electro-magnetic motor components should be provided.

In an embodiment, the linear motor conveying system further comprises a controlling system for controlling the linear motor conveying system to move the one or each of the more carrier systems (via at least one of their respective carrier modules) within the one or more track modules. This can comprise controlling (and powering) the electro-magnetic motor components, e.g., the coils, of the track modules in appropriate way.

In an embodiment such track module comprises a track component, and at least two bearing surfaces. Said track component comprises, along at least part of a conveying path, a first side part, a second side part and a bottom part, wherein the first side part and the second side part are arranged opposite to each other. The bottom part preferably is configured to be placed on and/or to be oriented towards and/or to be mounted to a ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts being the legs of the U).

At least a first one of the at least two bearing surfaces is arranged at or formed integrally with the first side part, and at least a second one of the at least two bearing surfaces is arranged at or formed integrally with the second side part, such that the at least one first bearing surface and the at least one second bearing surface face each other. The track module can also comprise more than two bearing surfaces, for example, two or three first and two or three second bearing surfaces. The number of bearing surfaces typically should match with the number and/or arrangement of wheels of a carrier module.

Such track module with two side parts allows receiving a carrier module between the first side part and the second side part. Such carrier module can comprise at least two wheels. In an embodiment, the track module is configured such that the at least one first bearing surface matches with at least a first wheel of the carrier module, and that the at least one second bearing surface matches with at least a second wheel of the carrier module. If more bearing surfaces are provided at the track module, more corresponding wheels can be provided at the carrier module. With respect to the bearing surface and the wheels, matching means that a wheel can be guided by and roll on a respective bearing surface.

The track module allows receiving a state of levitation of the carrier module between the two side parts of the track module, which reduces cogging. Switches (i.e., track modules of switch type) can be taken easily, other than with track modules providing guidance from one side only, for example This also enables high speed curves. Having guidance only from one side, for example, would result in limited speed in curves, due to the centrifugal force which acts upon the carrier while moving through a curve.

In an embodiment, such track module further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, the track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the carrier module.

Having guidance only from one side, for example, would require one-sided motor components. Due to the attraction force between the magnets and coils, if the carrier module was only powered on one side, there is quite some pressure on the wheels. This means that the wheels (for example, made of plastic) would wear down relatively fast.

Another shortcoming of having guidance on one side only that is overcome, is that the carrier module was only held to the system by the attraction force of the magnets to the coils. This not only leads to problems in the curve, but also to a limited load which can be transported. Furthermore, the centre of mass of the load needed to be above the carrier module as much as possible. These problems do not or by far less occur with the system provided within the present invention.

In an embodiment, the first electro-magnetic motor component is fixed to the first side part by means of gluing and/or screwing, and/or the second electro-magnetic motor component is fixed to the second side part by means of gluing and/or screwing. This allows simple, fast and safe fixation.

In an embodiment, the track component (i.e., the first and second side part and the bottom part) is formed in one piece. This allows easy processing and manufacturing. In embodiment, the track component is made of aluminum, preferably extruded aluminum. This allows easy processing and manufacturing; in addition, aluminium allows a lightweight. It is noted that the track component can have a structure with struts or the like, further reducing the weight and improving stability.

In an embodiment, the bottom part comprises one or more holes facing the ground surface. This allows for cleaning out small piece of debris. Also, water is allowed to drain when used in an IP65 type of environment, for example.

Another embodiment of the invention relates to a method for providing a linear motor conveying system for carrying a payload. The method comprises providing one or more track modules, said one or each of said more track modules having a first side part and a second side part. Further, two carrier modules are provided, wherein each of said carrier modules comprises a carrier component and at least two wheels, each of said carrier modules (150, 350, 650) to be received between the first side part and the second side part of the said one or one of said more track modules, wherein at least a first one of the two wheels and at least a second one of the two wheels are arranged at the carrier component opposite to each other, such that the at least one first wheel faces the first side component and the at least one second wheel faces the second side component, when received in the track module. Further, said two carrier modules are pivotally connected with each other via a link component and two pivot mechanisms, wherein the link component is configured to provide a mechanical interface for carrying said payload.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system in a perspective view;
- Fig. 2: shows a track module in a perspective view;
- Fig. 3a: shows a track module and a carrier module according to an embodiment in a perspective view;
- Fig. 3b: shows the track module and the carrier module of Fig. 3a in a cross section;
- Fig. 3c: shows the carrier module of Fig. 3a in a perspective view;
- Fig. 4a: shows a linear motor conveying system according to an embodiment perspective view;
- Fig. 4b: shows the linear motor conveying system of Fig. 4a in a top view; and
- Fig. 5: show a method for providing a linear motor conveying system according to an embodiment.

### Detailed description of the drawing

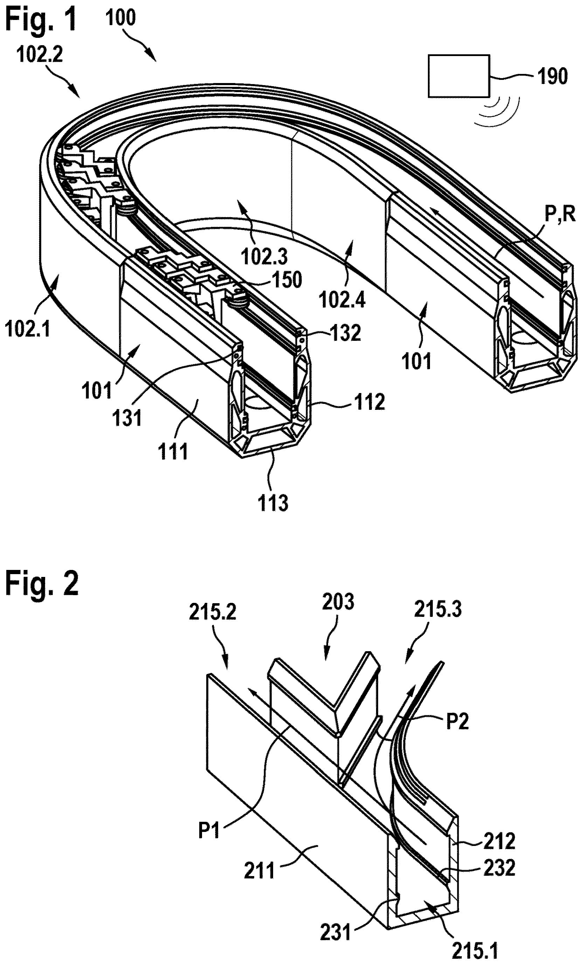

Fig. 1 schematically illustrates a linear motor conveying system 100 in a perspective view. The linear motor conveying system 100 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 101 are straight modules, and four track modules 102.1, 102.2, 102.3, 102.4 are curve modules. The straight modules 101 are both identical, in the example shown in Fig. 1. It is noted, however, that straight modules can have a different length, where a length is to be seen in moving or conveying direction along a conveying path P, indicated for a straight module 101 in Fig. 1.

The curve modules 102.1, 102.2, 102.3, 102.4 are different from each other, in the example shown in Fig. 1. The curve modules 102.1, 102.2, 102.3, 102.4 have different radii and/or curve shapes, for example. It is noted, however, that these four different curve modules are only for illustration. According to needs, different curve modules having different radii and/or different shape can be provided. However, the curve modules have in common that they all provide curved tracks, in particular, only curved tracks.

The straight module 101 at the lower left side in Fig. 1 will be described in more detail. The track module 101 comprises a track component 110, and at least two bearing surfaces 131, 132. By means of example, six bearing surfaces are shown in Fig. 1, while only two of them are indicated with a reference numeral.

Further, the track component 110 comprises a first side part 111, a second side part 112 and a bottom part 113, wherein the first side part 111 and the second side part 113 are arranged opposite to each other. By means of example, the track component 110, and also each of the first side part 111, the second side part 112 and the bottom part 113, are formed to have a structure with struts or ribs, rather than a full material structure. This allows using less material while still having a robust structure.

At least a first one of the at least two bearing surfaces (here, e.g., bearing surface 131) is arranged at or formed integrally with the first side part 111, and at least a second one of the at least two bearing surfaces (here, e.g., bearing surface 132) is arranged at or formed integrally with the second side part 112, such that the at least one first bearing surface 131 and the at least one second bearing surface 132 face each other.

By means of example, the bearing surfaces are formed by support structures like rods, arranged in or inserted into recesses in the first side part 111 and the second side part 112. In general, however, such bearing surface can also be formed by the first side part 111 and the second side part 112, e.g., by having specific shapes.

It is noted that this way of how a track module is formed, does not only apply to straight module 101 but also to other types of modules like the curve modules 102.1, 102.2, 102.3, 102.4.

Each of the straight modules and the curve modules shown in Fig. 1, have a conveying path, although only shown for one straight module 101, from a respective first to a respective second end. When the track modules are connected to each other, the individual tracking paths are also connected to from a cumulated conveying path, along which the carrier modules are guided and conveyed. Note that carrier modules can be moved or conveyed in both directions of a conveying path, either following the direction of the arrow indicating the conveying path P or reverse. As can be seen from Fig. 1, for example, a conveying path P also provides or defines conveying directions R, again the both directions mentioned.

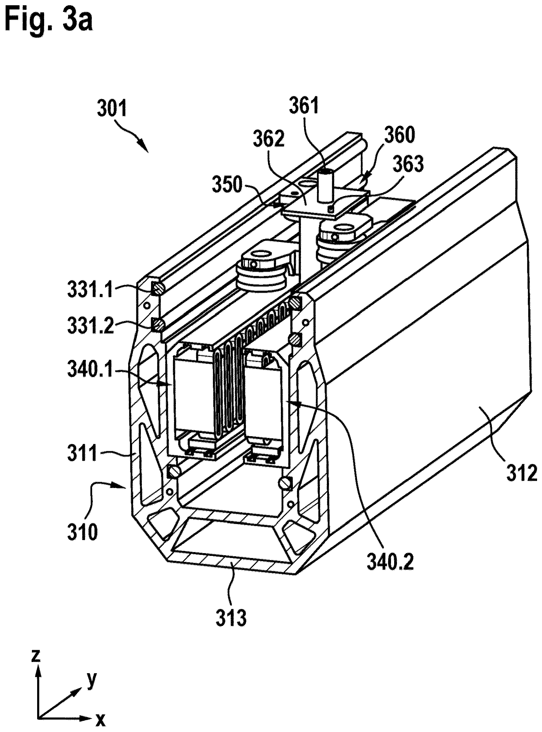

Further, the linear motor conveying system 100 comprises, by means of example, several carrier modules 150 (six carrier modules are shown in Fig. 1, while only one of them is indicated with a reference numeral). The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Fig. 1 but will be illustrated and described in more detail later with respect to Figs. 3a to 3c.

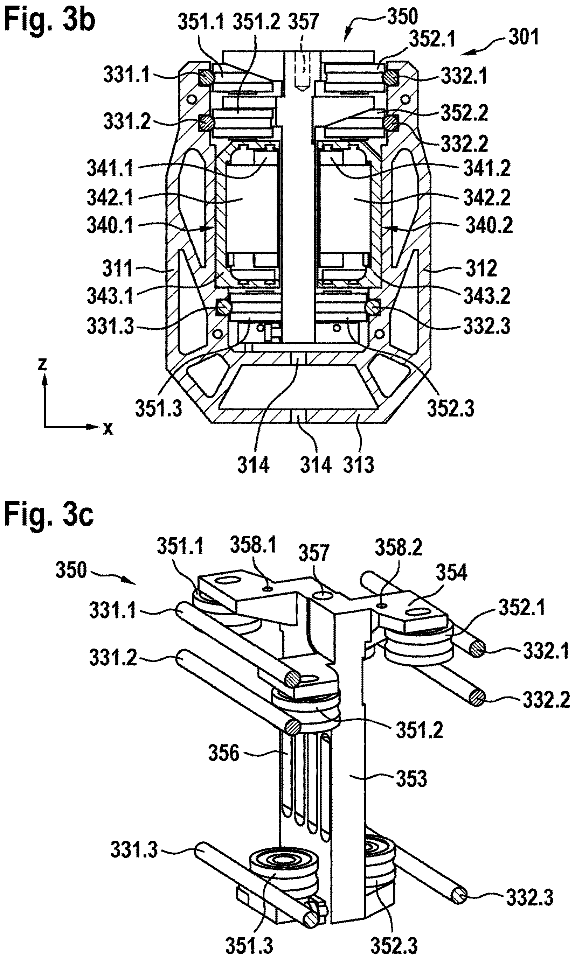

Further, the linear motor conveying system 100 can comprise, in an embodiment, a controlling system 190 for controlling the linear motor conveying system 100 to move the carrier modules 150 within the track modules 101, 102.1, 102.2, 102.3, 102.4, i.e., in moving or conveying direction R, indicated in Fig. 1. It is noted that such conveying direction R is a straight line for straight modules, but it is a curved line for curved modules. For operating the linear motor conveying system 100, by means of the controlling system 190, electro-magnetic motor components, for example, at the track modules, have to be controlled. Such electro-magnetic motor components are not shown in Fig. 1 but will be shown in Figs. 3a, 3b.

Fig. 2 schematically illustrates a track module 203 according to an embodiment in a perspective view. Track module 203 is a switch module, i.e., a track module of the switch type. Contrary to straight modules or curve modules, the carrier module is not restricted to move from one of two ends to the other of the two ends, i.e., enter the track module at a first end and leave the track module at a second end (having a single conveying path). Rather, the carrier module can enter the switch module at a first end 215.1 and leave the switch module at either a second end 215.3 or at a third end 215.3. The switch module 203 has two conveying paths P1 and P2, where conveying path P2 diverts from conveying path P1.

In order to control a linear motor conveying system comprising such switch module, in order to make the carrier module using conveying path P1, leaving at the second end 215.2 or using conveying path P2, leaving at the third end 215.3, electro-magnetic motor components, for example, at the track modules (not shown here), are to be controlled such that the carrier module is forced either to the second end 215.2 or to the third end 215.3. If the carrier module enters the switch module at the second end 215.2 or at the third end 215.3, in both cases, the carrier module will leave the switch module 203 at the first end 215.3. In other words, both conveying paths P1, P2 are merged.

Similar to the straight modules and curve modules shown in Fig. 1, the switch module 203 comprises a track component 210 for a conveying path, e.g., P1. The switch module 203 further comprises at least two bearing surfaces 231, 232. By means of example, six bearing surfaces are shown in Fig. 2, while only two of them are indicated with a reference numeral.

Further, the track component 210 comprises, along the conveying path P1, a first side part 211, a second side part 212 and a bottom part 213, wherein the first side part 211 and the second side part 213 are arranged opposite to each other. It is noted that the second side part 211 is interrupted along the conveying path P1, due to a diversion of conveying path P2. Similar to the conveying path P1, the track component comprises, along the conveying path P2, a first side part, a second side part and a bottom part (not indicated with reference numerals here).

By means of example, the track component 210, and also each of the first side part 211, the second side part 212 and the bottom part 113, are formed to have a full material structure, different to the track modules shown in Fig. 1. Depending on the way how the bearing surfaces are formed, e.g., their inclination, wheels of the carrier modules might have to have a corresponding inclination or arrangement.

At least a first one of the at least two bearing surfaces (here, e.g., bearing surface 231) is arranged at or formed integrally with the first side part 211, and at least a second one of the at least two bearing surfaces (here, e.g., bearing surface 232) is arranged at or formed integrally with the second side part 212, such that the at least one first bearing surface 231 and the at least one second bearing surface 232 face each other.

By means of example, and different to the bearing surfaces shown in Fig. 1, the bearing surfaces are formed by the first side part 211 and the second side part 212, by having specific shapes or geometry. Such switch module, however, could also comprise bearing surfaces formed like for the track modules shown in Fig. 1. Also, such switch module could comprise a track component formed like for the track modules shown in Fig. 1, i.e. with struts or rib structure.

Switch modules like the one shown in Fig. 2, can be used together with straight modules and curve modules like the one shown in Fig. 1, in order to create a (complex) track system and linear motor conveying system. It should be considered, that the bearing surfaces of the different track modules should be of the same type

Fig. 3a illustrates a track module 301 and a carrier module 350 according to an embodiment in a perspective view. In addition, a pivot mechanism 360 is illustrated. Fig. 3 b illustrates the track module 301 and the carrier module 350 of Fig. 3a in a cross section in the x-y-plane. Fig. 3c illustrates the carrier module 350 of Fig. 3a in a perspective view but without most parts of the track module. Figs. 3b and 3c do not illustrate the pivot mechanism 360, but connection interface means for it provided by or in the carrier module 350. Figs. 3a, 3b, 3c shall be described together in the following.

By means of example and for explanation of the basic structure and composition of a track module, track module 301 is a straight module. Track module 301 can correspond to track module 101 of Fig. 1, however, showing additional components. The following explanations apply also to other types of track modules.

The track module 301 comprises a track component 310, and, by means of example, six bearing surfaces 331.1, 331.2, 331.3, 332.1, 332.2, 332.3. Further, the track component 301 comprises, along a conveying path, a first side part 311, a second side part 312 and a bottom part 313, wherein the first side part 311 and the second side part 313 are arranged opposite to each other. The conveying path is not denoted in Fig. 3, but extends along the y-direction and can be similar or equal to conveying path P shown in Fig. 1.

By means of example, the track component 310, and also each of the first side part 311, the second side part 312 and the bottom part 313, are formed to have a structure with struts or ribs, rather than a full material structure. This allows using less material while still having a robust structure. For example, the bottom part 313 and parts of each of the first side part 311 and the second side part 312 have a double wall structure with supporting ribs between the two walls.

Three first bearing surfaces (here, e.g., bearing surfaces 331.1, 331.2, 331.3) are arranged at or formed integrally with the first side part 311, and three second bearing surfaces (here, e.g., bearing surfaces 332.1, 332.2, 332.3) are arranged at or formed integrally with the second side part 312, such that the at first bearing surfaces 331.1, 331.2, 331.3 and the second bearing surfaces 332.1, 332.2, 332.3 face each other, i.e., are oriented towards each other. In other words, all of the bearing surfaces are provided at an inner side of the respective first and second side parts, where the conveying path is formed.

By means of example, the bearing surfaces are formed by support structures like rods, arranged in or inserted into recesses in the first side part 311 and the second side part 312. In general, however, such bearing surface can also be formed by the first side part 311 and the second side part 312, e.g., by having specific shapes.

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1; a number of the electric coils can depend on the way how the coils are manufactured. Further, the first electro-magnetic motor component 340.1 can comprise one or more magnetic or ferromagnetic cores or a structured magnetic core 342.1, e.g., made of iron. Such magnetic or ferromagnetic core increases the magnetic forces produced by the electric coils. Further, the first electro-magnetic motor component 340.1 can comprise a holding or fixing structure 343.1 for fixing the coils and magnetic core to the first side part 311. The first electro-magnetic motor component 340.1 can be fixed to the first side part 311 by means of gluing and/or screwing, for example.

Similarly, the second electro-magnetic motor component 340.2 comprises one or more electric coils 341.2; a number of the electric coils can depend on the way how the coils are manufactured. Further, the second electro-magnetic motor component 340.2 can comprise one or more magnetic or ferromagnetic cores or a structured magnetic core 342.2, e.g., made of iron. Such magnetic or ferromagnetic core increases the magnetic forces produced by the electric coils. Further, the second electro-magnetic motor component 340.2 can comprise a holding or fixing structure 343.2 for fixing the coils and magnetic core to the second side part 312. The second electro-magnetic motor component 340.2 can be fixed to the second side part 312 by means of gluing and/or screwing, for example.

In an embodiment, the bottom part 313 is configured to be placed on and/or to be oriented towards and/or to be mounted to a ground surface. Such ground surface would be below the bottom part 313, seen in z-direction in Figs. 3a, 3b. In an embodiment, the bottom part 313 comprises one or more holes 314 facing the ground surface. This allows for cleaning out small piece of debris. Also, any fluid, e.g., water, is allowed to drain when used in an IP65 type of environment, for example.

The track module 301 is configured to receive a carrier module 350 between the first side part 311 and the second side part 312 and is, preferably, configured such that the first bearing surfaces 332.1, 332.2, 332.3 match with respective first wheels of the carrier module 350, and that the second bearing surfaces 332.1, 332.2, 332.3 match with respective second wheels of the carrier module 350.

While Figs. 3a, 3b shown the carrier module 350 being received in the track module 301, Fig. 3c shows the carrier module 350 as such. In addition, Fig. 3c shows the six bearing surfaces 331.1, 331.2, 331.3, 332.1, 332.2, 332.3 (these are rods, in this example). The carrier module 350 comprises a carrier component 353 and, by means of example, six wheels, three first wheels 351.1, 351.2, 351.3, and three second wheels 352.1, 352.2, 352.3 (note that wheel 352.2 is not visible in Fig. 3c). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six bearing surfaces 331.1, 331.2, 331.3, 332.1, 332.2, 332.3. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301; this reduces cogging.

The pivot mechanism 360 (see Fig. 3a), comprises, by means of example, a rod 361 and a mounting plate 362, wherein the rod 361 is fixed to the mounting plate 362. The mounting plate 362 can be fixed or attached to the carrier module 350 or the carrier component 353 thereof, by means of one or more screws 363 or other fixing means.

Further, the carrier module 350 comprises, in an embodiment, connection interface means for connecting the pivot mechanism 360 (see Figs. 3b, 3c). By means of example, such connection interface means comprise a dowel pinhole 357 (see Figs. 3b, 3c) and one or more threaded holes 358.1, 358.2 (see Fig. 3c) for screws like screw 363.

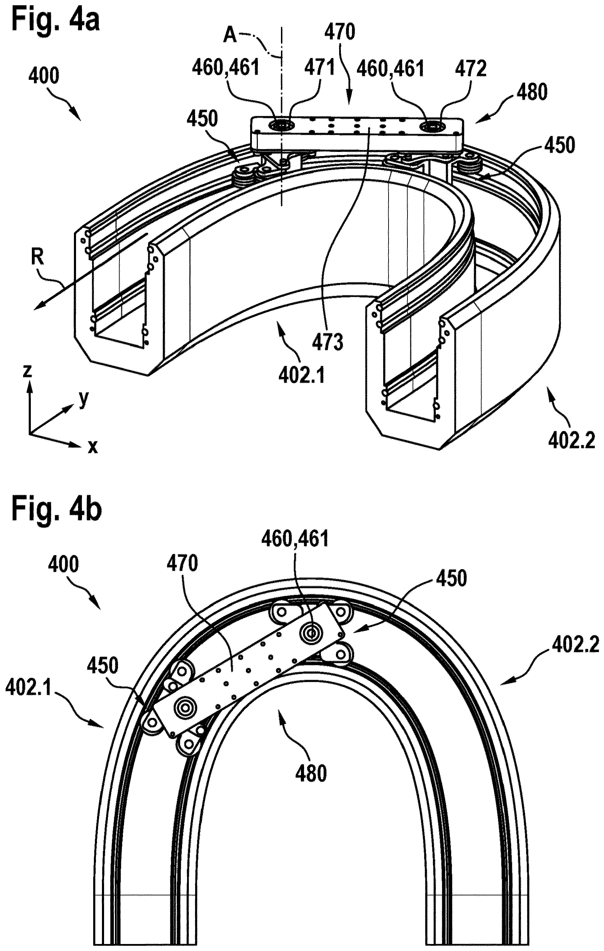

Fig. 4a schematically illustrates a linear motor conveying system 400 according to an embodiment perspective view; Fig. 4b illustrates the linear motor conveying system 400 of Fig. 4a in a top view.

The linear motor conveying system 400 comprises, by means of example, several track modules. Depending on the needs of a particular application for the linear motor conveying system, different types and numbers of track modules can be provided and also connected to each other to provide a track system. Types of track modules are, for example, straight modules, curve modules and switch modules.

By means of example, two track modules 402.1 and 402.2 and are curve modules. Further track modules can be provided. The curve modules 402.1, 402.2 can be similar to the curve modules 102.1, 102.2, 102.3, 102.4 of Fig. 1 but having different radii and/or lengths, for example. The system of track modules as such, however, is similar or equivalent to that of Fig. 1.

Further, the linear motor conveying system 400 comprises, by means of example, a carrier system 480. The carrier system 480 comprises two carrier modules 450, two pivot mechanisms 460, and a link component 470. The two carrier modules 450 can be identical and can also be identical to or similar to the carrier module 350 of Figs. 3a to 3c. Each of the two pivot mechanisms 460 can be identical and can also be identical to or similar to the pivot mechanism 360 of Fig. 3a. The pivot mechanisms 460 can be fixed our mounted to the respective carrier module 450 as explained with respect to Figs. 3a to 3c. Each of the carrier modules 450 can be received between a first side part and a second side part of a track module as explained with respect to the carrier modules 150 of Fig. 1.

The link component 470 is, by means of example, of an elongated form having two ends. At each of these ends, a through hole 471, 472 is provided in the link component 470. Further, the link component 470 is pivotally connected with each of said link mechanism 460 at a respective one of said ends. In particular, this is established via a respective rod 461 of a respective pivot mechanism 460 held or fed into a respective one of the through holes 471, 471. This allows a pivotable linkage between the two carrier modules 460, wherein the link component 470, or a mechanical interface 473, e.g., a surface, thereof, allows carrying a payload.

The link component 470 is pivotally connected with each of said link mechanism, pivotable about a respective pivot axis, one of these axes is denoted A. Said pivot axes A are oriented perpendicular to the conveying direction R of said carrier modules 460 when received in a track module. It is noted that the conveying direction changes with the carrier system moving in a curved module; however, the conveying direction will stay, at east in typical cases, within a plane which is typically parallel to a ground. In Fig.4a, such plane would be parallel to the x-y-plane. The Axes A then will be oriented in z-direction.

Further, the linear motor conveying system 400 can comprise, in an embodiment, a controlling system for controlling the linear motor conveying system 400 to move the carrier modules or the carrier systems within the track modules. The controlling system can be the one described with Fig. 1, for example.

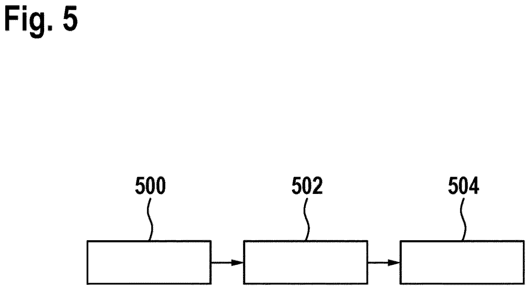

Fig. 5 illustrates a method for providing a linear motor conveying system according to an embodiment. In a step 500, one or more track modules are provided, said one or each of said more track modules having a first side part and a second side part. For example, the track modules shown in Figs. 1, 2, 3, 3b, 4a, 4b can be used.

In a step 502, two carrier modules are provided, for example, the two carrier modules 460 shown in Figs. 4a, 4b or two of the carrier modules 350 shown in Figs. 3a to 3c., Each of said carrier modules comprises a carrier component and at least two wheels, each of said carrier modules to be received between the first side part and the second side part of the said one or one of said more track modules. At least a first one of the two wheels and at least a second one of the two wheels are arranged at the carrier component opposite to each other, such that the at least one first wheel faces the first side component and the at least one second wheel faces the second side component, when received in the track module. Inserting the carrier modules can be done from an open end of one of the track modules, for example, or via a special track module having a switchable side door (not shown herein).

In a step 504, said two carrier modules are pivotally connected with each other via the link component and the two pivot mechanisms, wherein the link component is configured to provide a mechanical interface for carrying said payload. In this way, a carrier system is formed. It is noted that the two carrier modules can be linked before or after they have been inserted into the track module, e.g., depending on circumstances, needs or requirements. Also, the pivot mechanism can be mounted to the carrier modules before or after the carrier modules have been inserted into the track module, for example.

## Claims

1. A carrier system (480) for a linear motor conveying system (400), comprising two carrier modules (350, 450), two pivot mechanisms (360, 460), and a link component (470),
wherein each of said carrier modules (350, 460) comprises a carrier component (453) and at least two wheels,
wherein each of said carrier modules (350, 450) is configured to be received between a first side part and a second side part of a track module (101, 102.1, 102.2, 102.3, 102.4, 203, 301, 402.1, 402.2),
wherein at least a first one of the two wheels and at least a second one of the two wheels are arranged at the carrier component opposite to each other, such that the at least one first wheel faces the first side component and the at least one second wheel faces the second side component, when received in the track module,
wherein each of said pivot mechanisms (360, 460) is arranged at a respective one of said carrier modules (350, 460),
wherein the link component (470) is pivotally connected with each of said link mechanisms (360, 460) so as to connect said carrier modules (350, 450) with each other, and
wherein the link component (470) is configured to provide a mechanical interface (473) for carrying a payload.

2. The carrier system (480) of claim 1, wherein the link component (470) is pivotally connected with each of said link mechanism, pivotable about a respective pivot axis (A), wherein said pivot axes are oriented perpendicular to a conveying direction (R) of said carrier modules (350, 450) when received in a track module.

3. The carrier system (480) of claim 2, configured such that said carrier modules are spaced apart from each other, via the link component (470), by at least a distance corresponding to a length of one of said carrier modules in conveying direction.

4. The carrier system (480) of claim 2 or 3, wherein the mechanical interface (473) comprises a surface, wherein said surface is aligned, at least essentially, with said conveying direction (R).

5. The carrier system of any one of the preceding claims, wherein the link component (470) is of an elongated form having two ends, wherein the link component is pivotally connected with each of said link mechanism at a respective one of said ends.

6. The carrier system (480) of any one of the preceding claims, wherein the link component (470) is made of a rigid material and/or has a rigid structure.

7. The carrier system (480) of any one of the preceding claims, wherein each of said carrier modules (350, 450) comprises connection interface means (357, 358.1, 358.2), in particular, at a top side, for a respective one of said pivot mechanism.

8. The carrier system (480) of any one of the preceding claims, wherein each of said pivot mechanism (460) comprises a rod (461) or rod shape structure to be pivotally 470 to a respective through hole (471, 472) or bearing of the link component (480).

9. The carrier system (480) of any one of the preceding claims, wherein at least one of said carrier modules (350, 450) further comprises two counterpart electro-magnetic motor components,
wherein a first one of the two counterpart electro-magnetic motor components and a second one of the two counterpart electro-magnetic motor components are arranged at the respective carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

10. A linear motor conveying system (400), comprising one or more track modules and one or more carrier systems (480) of any one of the preceding claims, said one or more carrier systems (480) to be guided in the one or more track modules,
wherein said one or each of said more track modules is configured to receive a carrier module (350, 450) between a first side part (111, 311) and a second side part (112, 312), and
wherein the one or each of the more carrier systems (480) or their respective carrier modules are received or receivable in the one or each of the more track modules.

11. The linear motor conveying system (400) of claim 11, further comprising a controlling system (190) for controlling the linear motor conveying system (400) to move the one or each of the more carrier systems (480) within the one or more track modules.

12. The linear motor conveying system (400) of claim 10 or 11, wherein said one or each of said more track modules comprises a track component, and at least two bearing surfaces,
wherein said track component comprises, along at least part of a conveying path (P, P1, P2), the first side part (111, 311), the second side part (112, 312) and a bottom part (113, 313), wherein the first side part and the second side part are arranged opposite to each other,
wherein at least a first one (131, 331.1, 331.2, 331.3) of the at least two bearing surfaces is arranged at or formed integrally with the first side part (111, 311), and at least a second one (132, 332.1, 332.2, 332.3) of the at least two bearing surfaces is arranged at or formed integrally with the second side part (112, 312), such that the at least one first bearing surface and the at least one second bearing surface face each other.

13. The linear motor conveying system (400) of claim 12, wherein the bottom part is configured to be placed on and/or to be oriented towards and/or to be mounted to a ground surface.

14. The linear motor conveying system (400) of any one of claims 10 to 13, said one or each of said more track modules being configured as one of the following track module types: a straight module, a curve module, a switch module.

15. A method for providing a linear motor conveying system (400) for carrying a payload, comprising:
Providing (500) one or more track modules, said one or each of said more track modules having a first side part and a second side part,
Providing (502) two carrier modules, wherein each of said carrier modules comprises a carrier component and at least two wheels, each of said carrier modules (150, 350, 650) to be received between the first side part and the second side part of the said one or one of said more track modules, wherein at least a first one of the two wheels and at least a second one of the two wheels are arranged at the carrier component opposite to each other, such that the at least one first wheel faces the first side component and the at least one second wheel faces the second side component, when received in the track module,
Connecting (504) said two carrier modules pivotally with each other via a link component and two pivot mechanisms, wherein the link component is configured to provide a mechanical interface for carrying said payload.
